(19) Europäisches Patentamt
European Patent Office
Office européen des brevets

(11) **EP 0 790 901 B1**

(12) **EUROPÄISCHE PATENTSCHRIFT**

(45) Veröffentlichungstag und Bekanntmachung des Hinweises auf die Patenterteilung:
02.09.1998 Patentblatt 1998/36

(21) Anmeldenummer: 94930910.8

(22) Anmeldetag: 09.11.1994

(51) Int. Cl.⁶: **B60C 9/06**, B60C 15/02

(86) Internationale Anmeldenummer:
PCT/CZ94/00025

(87) Internationale Veröffentlichungsnummer:
WO 96/15001 (23.05.1996 Gazette 1996/23)

(54) **KOMPAKTER ENTLASTETER SCHLAUCHREIFEN**

COMPACT BALANCED TUBE TYRE

PNEU A CHAMBRE EQUILIBRE COMPACT

(84) Benannte Vertragsstaaten:
BE DE FR IT NL

(43) Veröffentlichungstag der Anmeldung:
27.08.1997 Patentblatt 1997/35

(73) Patentinhaber: Klabal, Miloslav
765 02 Otrokovice (CZ)

(72) Erfinder: Klabal, Miloslav
765 02 Otrokovice (CZ)

(74) Vertreter:
Dusil, Vladimir, Dipl.-Ing.
Goethestrasse 60A
64347 Griesheim (DE)

(56) Entgegenhaltungen:
EP-A- 0 082 827          EP-A- 0 133 072
GB-A- 2 026 960          US-A- 1 862 492
US-A- 4 852 625

**Beschreibung**

Das Gebiet der Technik

Die Lösung betrifft die Konstruktion des Schlauchreifens, der für verschiedene Fahrzeugtype, einschließlich der Motorfahrzeuge, besonders jedoch für Radfahresport ausgenützt werden kann.

Bisheriger Stand der Technik

Schlauchreifen, also Reifen mit tubulöser geschlossener Reifendeske, werden dadurch gekennzeichnet, daß sie im Gegenteil zu klassischen Reifen keine Wulstdrähte aufweisen und daß die Deckenränder am inneren Umfang zueinander verbunden sind. Auf diese Weise wird der Schlauch im Inneren der Decke verschlossen. Schlauchreifen werden wegen ihrer Leichtigkeit und Fahreigenschaften besonders im Radfahresport ausgesucht. Die Konstruktionslösung der Schlauchreifen läuft stufenweise durch einzelne Entwicklungsphasen, die einerseits durch technologische Probleme, andererseits durch Unvollkommenheiten der Gebrauchseigenschaften hervorgerufen werden.

Vom technologischen Standpunkt kann der Grund des Problems als Problem der Veränderung oder Verformung des bandförmigen Gebildes, welches die angewendeten Gewebeeinlagen darstellen, zu einem tubulösen Gebilde bezeichnet werden, das der fertige Schlauchreifen bildet. Es ist klar, daß keine Schlauchreifenkonstruktion eine befriedigende Lösung der Umfangverbindung der getränkten Gewebeeinlagen entbehren kann.

Die klassische Konstruktion des Schlauchreifens löst die Verbindung der Längsränder der Karkasse im Nähverfahren. Dieser Vorgang ist mühsam und bringt Probleme auch in Anwendungshinsicht, da eventuelle Unebenheiten des Nähens in der Ungleichmäßigkeit des Profils des Schlauchreifens auf verschiedenen Stellen des Umfanges zum wesentlichen Ausdruck kommen.

Mit der Absicht die Nachteile genähter Schlauchreifen zu entfernen wurden Konstruktionen entwicket, bei welchen die Längsränder der Karkasse im Klebeverfahren verbunden werden. Die Probleme dieser Phase (Arbeitsaufwand, Ungleichmäßigkeiten) wurden wirklich im wesentlichen Ausmaß entfernt, es erschienen jedoch andere Schwierigkeiten, die aus der Tatsache hervorgehen, daß es notwendig war, die Klebeverbindung durch Überlappung entweder durch eigenes Material der Karkasse oder durch ein Hilfsmaterial ähnlichen Charakters zu lösen. Auf diese Weise kam - im Gegenteil zu genähtem Schlauchreifen - einer der Ränder immer auf die innere Oberfläche der Decke des Schlauchreifens und, wie es sich gezeigt hat, wurde zur Quelle der Probleme. Beim Betrieb des Schlauchreifens kam es nämlich allmählich zur Auflockerung eines solchen Randes und der Schlauch des Schlauchreifens wurde dann löcherig.Führende Hersteller von Schlauchreifen lösen das obergenannte schwierige Problem durch Überlappung des inneren Längsrandes der Karkasse mit Hilfe eines Gummibandes. Diese bisher einzige bekannte Lösung bedeutet jedoch bei der Herstellung eine Mehroperation sowie einen Mehrverbrauch von Material mit betreffendem Massen- und ökonomischem Auswirken.

Mit der Art der Verbindung der Längsränder der Karkasse des Schlauchreifens im Klebeverfahren hängt auch die Problematik des Zwischenbaus des Schlauchreifens zusammen. Neben der ausreichenden Verfestigung des Laufflächenbereiches und Erhaltung der günstigen mechanischen Charakteristiken, vor allem Fähigkeit der Energieabsorbtion, ist das Niveau der Konstruktionslösung des Zwischenbaus ebenfalls von der Verbindungszuverlässigkeit seiner einzelnen Schichten, niedriger Masse, eifacher Technologie und übrigen vor allem ökonomischen Aspekten abhängig.

Beim klassischen (genähten) Schlauchreifen befindet sich unter der Lauffläche ein klassischer Zwischenbau aus zwei Kordlagen. Die angeführte Konstruktion besitzt entsprechende Fahreigenschaften, aber ihr Nachteil ist die Möglichkeit der Trennungen einzelner Schichten sowie Arbeitsaufwand der Konfektion.

Beispiel des geklebten Schlauchreifens ist die Einlagekonstruktion, die als Lage Gewebe mit Überlappung im Wulstbereich, also am inneren Umfang des Schlauchreifens ausnützt. Der Zwischenbau stellt dann eine oder mehrere Lagen aus Nesselgewebe dar - Gewebe, das gewöhnlich unter Winkel von 45° geschnitten wird. Vorteil dieser Lösung im Vergleich zu vorhergehender klassischer Konstruktion ist einfachere Technologie, Nachteil dann ungünstiger Einfluß des Zwischenbaus aus Nesselgewebe auf Fahreigenschaften des Schlauchreifens, der in Erhöhung der Steifheit und dadurch in niedriger Fähigkeit des Zwischenbaus, die Stoßenergie zu absorbieren, zum Ausdruck kommt. Einen gemeinsamen Nachteil beider vorhergehenden Konstruktionen stellt die Notwendigkeit dar, ein weiteres Material für Zwischenbau mit entsprechendem Massen- und ökonomischen Auswirken anzuwenden. Bei der letztangeführten Methode ist dieser Nachteil Folge des Bestrebens, den inneren Längsrand der Karkasse in den dynamisch am wenigsten beanspruchten Wulstbereich des Schlauchreifens anzubringen, wodurch die Trennungen des Randes auf Mindestmaß gebracht werden können, ohne ihn mit Gummiband überdecken zu müssen.

Gewiße Verbesserung der vorhergehenden Konstruktion des geklebten Schlauchreifens stellt die Bildung des Zwischenbaus durch Überlappung der Gewebten Lage im Laufflächenbereich dar. So wird beim Schlauchreifen, dessen Karkasse durch eine Gewebelage gebildet wird, die Verstärkung im Bereich der Verbindung gerade zur Zwischenbaukonstruktion ausgenützt. Mit Rücksicht auf den Charakter das Lagenmaterials ist dieser Zwischenbau verhältnismäßig

wenig fähig, die Stoßenergie zu absorbieren, ebensowie bei der vorhergehenden Lösung. Der Nachteil dieser Lösung im Vergleich mit der vorhergehenden ist jedoch wieder das Problem des inneren Randes der Karkasse, der mit Rücksicht auf Anordnung in der dynamisch am meisten beanspruchten Bereich des Schlauchreifens wieder mit Gummiband überdeckt werden muß.

Mit dem Ziel, günstigere Fahreigenschaften zu erreichen, wurde die Konstruktion geklebter Zweilagenschlauchreifen gebildet, bei welchen das Lagenmaterial Kord ist und die Verbindung der Längsränder der Karkasse durch Überlappung gerade im Laufflächenbereich erfolgt, wodurch die durch Verbindung gegebene Verstärkung zur Ausbildung des Zwischenbaus ausgenützt wird. Solche Konstruktion des Schlauchreifens ist nicht nur durch einen höheren Ausnützungsgrad des Materials, sondern gleichzeitig auch durch entsprechende Fahreigenschaften charakteristisch. Nachteil bleibt jedoch ebensowie bei klassischem Zwischenbau die Trennungsmöglichkeit einzelner Schichten. Schwerwiegend ist vor allem die Trennungsmöglichkeit des inneren Längsrandes der Karkasse, die durch Herabsetzung der Sicherheit des Schlauchreifens gefolgt wird.

Ein Schlauchreifen gemäß dem Oberbegriff des Anspruchs 1 ist aus EP-A-0 082 827 bekannt.

Der Grund der Erfindung

Die angeführten Nachteile und Mängel der bisher bekannten Lösungen von Schlauchreifen werden durch den kompakten entlasteten Schlauchreifen nach Erfindung weitgehend entfernt. Der Schlauchreifen wird durch die tubulöse Decke gebildet, die innere Luftdichte Schicht einschließt und mit Lauffläche bzw. Zwischenbau und Seitenwänden versehen ist, wobei die Tragkarkasse seiner Decke die den meridionalen Umfang der Decke überschreitende Breite aufweist und durch zwei Traglagen gebildet wird, die aus Diagonalkord hergestellt sind und aufeinander mit gegenseitiger Kreuzung der Fasern liegen, und diese Tragkarkasse durch Längsüberlappung zu tubulöser Form verbunden wird. Der Grund der Erfindung liegt darin, daß der innere Längsrand der inneren Traglage des Schlauchreifens in den anderen Längsrandbereich derselben inneren Traglage stufenlos eingegliedert wird, und zwar in einer Fläche der Breite, die mindestens 2 mm und höchstens die Breite ihres Übermaßes gegen den inneren Längsrand der äußeren Traglage beträgt, wobei die Tragkarkasse der Decke mit kompakter innerer Oberfläche, die aus auf diese Weise angeordneten Traglagen gebildet wird, in tubulöser Form die Breite der mit Vorteil im Bereich unter der Lauffläche untergebrachten Überlappung aufweist, die mindestens 10 mm und höchstens 63% des meridionalen Umfanges der Decke beträgt.

Eine günstige Ausführung des kompakten entlasteten Schlauchreifens stellt dann die Variante dar, bei welcher ebenfalls der äußere Längsrand der äußeren Traglage gleichzeitig stufenlos in den anderen Längsrandbereich derselben Traglage eingegliedert wird, und zwar in Fläche der Breite, die mindestens 2 mm und höchstens die Breite ihres Übermaßes gegen den äußeren Längsrand der inneren Traglage beträgt.

Die durch zwei angeführte Traglagen gebildete Tragkarkasse der Decke kann durch eine oder mehrere Versteifungslagen verstärkt werden, soweit diese außerhalb des inneren meridionalen Deckenumfanges so untergebracht werden, daß die gegenseitige Stellung der Traglagen, besonders ihrer inneren Längsränder, nicht geändert wird.

In materieller Hinsicht ist es günstig, wenn der die Traglagen und besonders die innere Traglage bildende Kord höchstens eine Gewebedichte aufweist, bei welcher die Breite des Zwischenraumes zwischen den Fasern höher als die Hälfte der Faserdicke ist, vor allem dann höher oder gleich der Dicke der Kordfasern.

Der Vorteil der Konstruktion des kompakten entlasteten Schlauchreifens nach Erfindung liegt in einfacher Technologie, und zwar nicht nur im Vergleich mit klassischen genähten Schlauchreifen, sondern auch mit Rücksicht auf geklebte Schlauchreifen mit Verbindung der Längsränder der Karkasse im Bereich unter der Lauffläche, die gegen Trennung des inneren Karkassenrandes mit Gummiband gesichert werden müssen. Die Lösung nach Erfindung ermöglich es, kompakten Schlauchreifen herzustellen, bei welchem der innere Längsrand der Karkasse auch bei Unterbringung in dynamisch höchstens belastetem Bereich - unter der Lauffläche nicht getrennt wird. Problemlose Unterbringung der Überlappung der Tragkarkasse gerade im Bereich unter der Lauffläche ermöglicht bei der Konstruktion des kompakten Schlauchreifens nach Erfindung, entlastete Konstruktion - kompakten entlasteten Schlauchreifen zu gewinnen. Neben dem günstigen Auswirken auf die Masse des Schlauchreifens ist eine solche Lösung auch vom Standpunkt der Materialausnützung günstig, da die durch Überlappung entstehende Verstärkung der Tragkarkasse im fertigen Schlauchreifen gleichzeitig als Zwischenbau einwirkt.

Der kompakte entlastete Schlauchreifen nach Erfindung besitzt neben technologischen Vorteilen hervorragende Fahreigenschaften dank Anwendung von Kordlagen, die es ermöglichen, bessere Verformungscharakteristiken als bei Anwendung von Geweben bzw. Nesselgewebe als Trag- oder Verstärkungsmaterialien zu erreichen. Bei allen bisher angeführten Vorteilen, d. h. vorzügliche Fahreigenschaften, Leichtigkeit, niedrigerer Materialverbrauch und einfachere Technologie, ist der Grundzug des kompakten entlasteten Schlauchreifens nach Erfindung seine Betriebszuverlässigkeit, da die Konstruktionslösung nach Erfindung ermöglicht, eine wirklich kompakte innere Oberfläche der Schlauchreifensdecke ohne Gefahr der Trennung der Karkassenränder und nachfolgende Perforation der inneren Dichtungsschicht des Schlauchreifens zu erreichen.

Übersicht der Figuren auf der Zeichnung

Die Erfindung wird näher mit Hilfe von der Zeichnung erklärt, auf welcher folgendes dargestellt wird:

Fig. 1 -           Beispiel der Anordnung des Halbfabrikats der Tragkarkasse

Fig. 2, 3, 4 -     geformtes Konfektionshalbfabrikat der Karkasse,bei verschiedenem Grad der Überlappung des flachen Halbfabrikats nach Fig. 1 gewonnen

Fig. 5, 6 -        Alternativen zur Fig. 1 - andere Varianten der Anordnung des flachen Halbfabrikats

Fig. 7 -           Tragkarkasse der Schlauchreifendecke nach Vulkanisation - an Fig. 1 und 3 anknüpfender Endzustand.

Alle Darstellungen sind in Querschnitt oder meridionalem Schnitt ausgeführt.

Ausführungsbeispiele der Erfindung

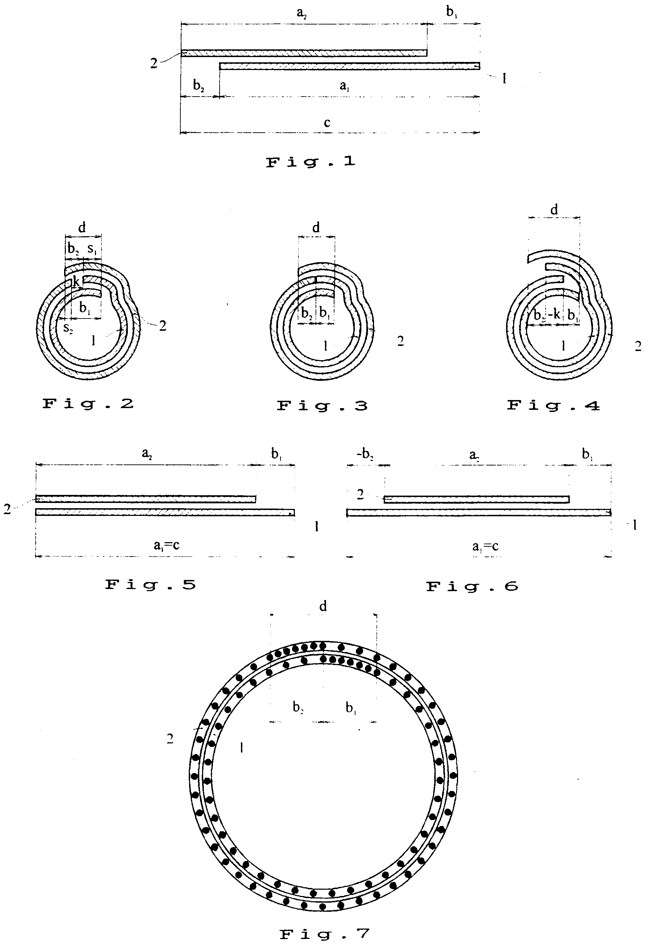

Eine günstige Ausführung der Tragkarkasse der Decke des kompakten entlasteten Schlauchreifens wird gerade aus flachem Halbfabrikat nach Fig. 1 gewonnen, wobei nach Überlappungsausmaß einzelne Varianten des tubulösen Konfektionshalbfabrikats - sieh Fig. 2, 3, 4 - entstehen. Diese Ausführungen sind günstig, indem sie die Fixierung nicht nur des inneren Längsrandes der inneren Traglage $\underline{1}$ (was bei der Lösung nach Erfindung die notwedige Bedingung darstellt), sondern auch die Aufnahme des äußeren Längsrandes der äußeren Traglage $\underline{2}$ ermöglichen. Aus der Fig. 2, 3, 4 ist ersichtlich, daß jeder der erwähnten Ränder nach der Formgebung mit Material derselben Lage in Kontakt gelangt, also mit Kordfasern derselben Richtung. Diese Tatsache ist für die Erreichung einer ausreichenden Bindung zwischen dem Rand und der Unterlage bei der Vulkanisation entscheidend.

Die Konstruktion der Tragkarkasse der Decke nach Fig. 2, 3, 4 enthält das in flachem Zustand auf Fig. 1 dargestellte Halbfabrikat, das aus zwei überlappten allgemein ungleich breiten Kordlagen zusammengesetzt wird - der inneren Traglage $\underline{1}$ der Breite $a_1$ und der äußeren Traglage $\underline{2}$ der Breite $a_2$. Dabei wird das innere Übermaß der inneren Traglage $\underline{1}$ $b_1$, das äußere Übermaß der äußeren Traglage $\underline{2}$ dann $b_2$ bezeichnet. Durch Konkretisierung dieser Lösung für den Fall, wo $a_1 = a_2$, also wo beide Traglagen dieselbe Breite haben (in der Praxis gut ausnützbar - einfachere Technologie), geht aus der Fig. 1 hervor, daß $b_1 = b_2$ und daraus ferner, daß soweit die Bedingung einer ausreichenden Überlappung zur Aufnahme des inneren Randes der inneren Traglage $\underline{1}$ erfüllt wird, ebenfalls in demselben Ausmaß der äußere Rand der äußeren Traglage $\underline{2}$ aufgenommen wird. Desto eher wird der beschriebene Zustand für $b_2 > b_1$ (also $a_2 > a_1$) gesichert. Die angeführten Tatsachen führen zur Schlußfolgerung, daß bei allen Konstruktionsvarianten der Tragkarkasse der Decke des Schlauchreifens nach Erfindung (das heißt bei solchen, wo das Übermaß der inneren Traglage $\underline{1}$ $b_1$ und die Gesamtüberlappung d für die Aufnahme des inneren Randes der inneren Traglage $\underline{1}$ ausreichend sind), bei welchen sich ferner die Breiten der Traglagen in der Beziehung $a_2 \geq a_1$ befinden, also die äußere Traglage $\underline{2}$ ist so breit oder breiter als die innere Traglage $\underline{1}$, es sich um günstige Ausführung der Konstruktion handelt, wo der innere und äußere Rand der Karkasse zur Unterlage ohne Trennungsgefahr fixiert sind.

Die Überlappung d muß also wenigstens in gewißer minimaler Breite ausgeführt werden, um die Grundeinwirkung der Erfindung zu sichern (Aufnahme des inneren Karkassenrandes), wobei das weitere Wachstum der Breite d zu allmählicher Vergrößerung der Bindungsfläche und ferner zur Erhöhung der Anzahl der Schichten bis auf 4 im Bereich der Überlappung führt und Bedeutung für die Ausbildung des notwendigen Zwischenbaus des Schlauchreifens hat. Ein solcher Zwischenbau stellt die Optimierung der Materialausnützung dar, wobei seine Gebrauchseigenschaften eine Verbesserung im Vergleich zu bestehenden vergleichbaren Lösungen aufweisen. Die obere Grenze der Überlappungsbreite ist dann an die Laufflächenbreite gebunden, die auf den Zwischenbau angewendet werden soll.

Falls die Konstruktion der Tragkarkasse der Decke aus einem Halbfabrikat gebildet wird, bei welchem $a_2 < a_1$, kann die Aufnahme auch des äußeren Randes der Tragkarkasse der Decke nicht mehr eindeutig gesichert werden. Der wirkliche Zustand wird von der konkreten Geometrie des flachen Halbfabrikats, vor allem vom Übermaß $b_2$ und von der Überlappungsbreite d abhängen. Soweit jedoch bei $a_2 < a_1$ zur Bildung der Tragkarkasse das Halbfabrikat nach Fig. 5 oder 6 angewendet wird, bei welchem das Übermaß $b_2$ Null oder sogar negativ ist (sieh Fig. 6, wo auch auf dem äußeren Längsrand der Karkasse die innere Lage überragt), ist es klar, daß in diesen Fällen die Aufnahme des äußeren Längsrandes der Karkasse nicht mehr zustandekommt. Die Fig. 5 und 6 stellen also schon weniger günstige Alternativen der Konstruktion der Tragkarkasse der Schlauchreifendecke nach Erfindung dar. Zur Anordnung nach Fig. 5 kann dabei bemerkt werden, daß diese Variante auch durch Längsfalten eines einzigen Kordbandes außerhalb der Mittenlinie zu zwei ungleich breiten Bändern, die dann die innere Traglage $\underline{1}$ und die äußere Traglage $\underline{2}$ bilden, erfolgreich hergestellt werden kann.

Bei ausführlicher Analyse der Konstruktionslösung der in Fig. 2, 3, 4 dargestellten Tragkarkasse der Schlauchreifendecke ist ersichtlich, daß der Gesamtumfang der Überlappunng d einerseits übereinstimmende Überlappung (in der Fig. 2 $s_1$, $s_2$ bezeichnet, in Fig. 3, 4 $s_1 = b_1$, $s_2 = b_2$), anderseits Kreuzüberlappung umfaßt (in der Fig. 2, 4 k bezeichnet, in der Fig. 3 k = 0). Bei allen in Fig. 2, 3, 4 dargestellten Varianten wird nach der Zeichnung und gleichzeitig aus allgemeinen Bedingungen der Ausführbarkeit der Lösung nach Erfindung vorausgesetzt, daß

| $b_1 > 0$ ($b_1 > 2$ mm) | $s_1 > 2$ mm | $d > 10$ mm |
|---|---|---|
| $b_2 > 0$ | $s_2 > 0$ | |

Bei den Konstruktionen nach Fig. 2, 3, 4 gilt die Beziehung

$d = s_1 + k + s_2$, wo $s_1 = d - b_2$, $s_2 = d - b_1$, also $d = d - b_2 + k + d - b_1$ und weiter nach Umformung $d = b_1 + b_2 - k$

Wenn man aus dieser Gleichung den Wert der Kreuzüberlappung k ausdrückt, bekommt man die Beziehung

$$k = b_1 + b_2 - d$$

Wenn man in Betracht nimmt, daß die Werte von $b_1$, $b_2$ und deshalb auch ihre Summe für das gegebene konkrete flache Halbprodukt konstant sind wird der Wert der Kreuzüberlappung k nur in Abhängigkeit von der Gesamtüberlappung k nur in Abhängigkeit von der Gesamtüberlappung d geändert, und zwar folgendermaßen:

| $k = $ max. ($s_1$, $s_2 = $ min.) | bei $d < b_1 + b_2$ (Fig.2, $s_1 \rightarrow 2$ mm) |
|---|---|
| $k = 0$ ($s_1 = b_1$, $s_2 = b_2$) | bei $d = b_1 + b_2$ (Fig. 3) |
| $k < 0$ ($s_1 = b_1$, $s_2 = b_2$) | bei $d > b_1 + b_2$ (Fig. 4) |

Aus diesen Beziehungen können für den Verlauf und Grenzen der Einwirkungen der Erfindung, die von dem Ausmaß der übereinstimmenden und der Kreuzüberlappung abhängen, folgende Schlußfolgerungen gezogen werden:

Bei einem konkreten flachen Halbfabrikat ($b_1$, $b_2$ =konst. ) erhöht sich bei stufenlos zunehmender Überlappung d die übereinstimmende (Bindungs)überlappung $s_1$, $s_2$ von Minimalwert $s_1 = 2$ mm, $s_2$ ist gleich mit Vorteil auch 2 mm bis zum Wert $s_1 = b_1$, $s_2 = b_2$ (für $d = b_1 + b_2$). Ferner spiegelt sich die Erhöhung (des absoluten Wertes) der Kreuzüberlappung k, die zur Bildung des Zwischenbaus des Schlauchreifens beiträgt. Die übereinstimmende Überlappung $s_1$, $s_2$ bleibt nach Erreichung der Werte $b_1$, $b_2$ konstant, ferner erhöht sich diese Bindungsüberlappung nicht mehr.

Wie es schon angeführt wurde, ist es zur zuverlässigen Aufnahme notwendig, daß der betreffende Längsrand der Tragkarkasse des Schlauchreifens in Kontakt mit der Unterlage kommt, die Kordfasern derselben Richtung enthält. Bei Zweilagenschlauchreifen mit diagonalen kreuzweise gelegten Kordlagen handelt es sich um Kontakt des Lagenrandes mit derselben Lage. Es hat sich gezeigt, daß eine weitere Erhöhung der Wirksamkeit der Aufnahme durch Anwendung des Kords erreicht werden kann, dessen Gewebedichte ein klares bzw. vollkommenes Ineinanderfallen der Faserenden aus dem Rand der Kordlage in die Zwischenräume in der Gewebedichte der Unterlage, die dieselbe Kordlage darstellt.

Auf nächster Seite wird ein konkretes Beispiel der Konstruktion nach Erfindung beim Schlauchreifen der Abmessung 20-622 durch die entsprechende technische Angaben beschrieben.
Der Schlauchreifen der Abmessung 20-622 hat:

| meridionaler Umfang | 62 mm |
|---|---|
| Breite der inneren Lage $a_1$ | 74 mm |
| Breite der äußeren Lage $a_2$ | 74 mm |
| Übermaßbreite $b_1$ | 10 mm |
| Übermaßbreite $b_2$ | 10 mm |
| Überlappungsbreite d | 22 mm |

(fortgesetzt)

| Breite der Kreuzüberlappung k | 2 mm |
|---|---|
| Gewebedichte | 11,5 cm$^{-1}$ |
| Fadendicke | 0,32 mm. |

Industrielle Ausnützbarkeit

Die Konstruktion des kompakten entlasteten Schlauchreifens nach Erfindung kann bei allen Typen der Fahrzeuge, einschließlich der Kraftwagenfahrzeuge angewendet werden.

**Patentansprüche**

1. Kompakter, leichter Schlauchreifen für Fahrzeuge, insbesondere für Radsport, bestehend aus einem schlauchartigen, eine innere luftdichte Schicht umschließenden Mantel, der eine Lauffläche und Seitenwände aufweist und ggf. mit einer Versteifung versehen ist und dessen Tragkarkasse (1,2) durch Überlappung ihrer Randbereiche zum schlauchartigen Gebilde geformt wird und eine den meridialen Umfang des Mantels überschreitende Breite aufweist, dadurch **gekennzeichnet,** daß die Tragkarkasse durch zwei im Querschnitt übereinander angeordnete Tragschichten (1,2) gebildet ist, die erste und zweite Randbereiche aufweisen, wobei der erste Randbereich mindestens einer der Tragschichten (1,2) in deren zweiten Bereich kontinuierlich eingegliedert ist.

2. Schlauchreifen nach Anspruch 1, dadurch gekennzeichnet, daß die Breite der Verbindung der beiden Randbereiche der inneren oder der äußeren Tragschicht (1,2) mindestens 2 mm beträgt und höchstens der Breite (b1,b2) des Bereichs entspricht, der durch die Versetzung der Tragschichten (1,2) zueinander in Umfangsrichtung entsteht.

3. Schlauchreifen nach Anspruch 1 oder 2 dadurch gekennzeichnet, daß die Breite (d) der Fläche der Tragkarkasse, in der die beiden Randbereiche der Tragschichten (1,2) kontinuierlich ineinander übergehen, mindestens 10 mm und höchstens 63 % des meridialen Umfangs des Mantels beträgt.

4. Schlauchreifen nach einem der Ansprüche 1 bis 3 dadurch gekennzeichnet, daß die Tragschichten (1,2) aus diagonalem Kordstoff bestehen und übereinander mit sich kreuzenden Fasern angeordnet sind.

**Claims**

1. A compact, light-weight tubular tyre for vehicles, particularly for race cycling, comprising a tubular casing enveloping, an internal air-impermeable layer and provided with a tread and sidewalls and, if need be, a reinforcement, and the carrying carcass (1,2) of the said tubular casing forming a tubular body by overlapping its edge parts, with the carrying carcass width exceeding, the meridian circumference of the casing, wherein the carrying carcass incorporates two carrying layers (1,2) placed on each other and having first and second edge parts, with the first edge part of at least one of the carrying layers (1,2) being incorporated into its second part in a stepless manner.

2. A tubular tyre according to claim 1, wherein the width of the joint of both edge parts of the internal or external carrying layer (1,2) is at least 2 mm and at maximum corresponds to width (b1, b2) of the surface formed by mutual overlap of the carrying layers (1, 2) in the circumferential direction.

3. A tubular tyre as claimed in claim 1 or 2, wherein the width (d) of the carrying carcass surface in which both edge parts of the carrying layers (1,2) penetrate each other continuously is 10 mm at minimum and 63 % of the tyre meridian circumference at maximum.

4. A tubular tyre as claimed in one of the claims 1 to 3, wherein the carrying layers (1,2) are made from a diagonally arranged cords with the carrying layers being placed over each other and fibres crossing each other.

**Revendications**

1. Boyau compact léger pour vehicules, surtout pour la cyclistique de sport, formé par une envelope tubulaire qui entoure la couche intérieure étanche à air et qui est pourvu d'une bande de roulement avec des flancs, éventuellement, avec un renforcement et dont la carcasse portante (1,2), en superposant ses parties marginales, forme un corps tubulaire dont la largeur dépasse le périmètre méridien de l'enveloppe, caracterisé en ce que la carcasse portante (1,2) est formée par deux couches portantes (1,2) adaptée l'une sur l'autre dans la section, qui ont ses premières et deuxièmes parties marginales, où la première partie marginale au moins d'une des couches portantes (1,2) pénètre de facon continue dans son autre partie.

2. Boyau selon la revendication 1 caracterisé en ce que la largeur de l'assemblage des deux parties marginales de la couche intérieure ou extérieure portante (1,2) est au moins 2 mm et répond dans son maximum á la largeur (b1,b2) de la surface qui est créée par la superposition mutuelle des couches portantes (1,2) dans le sens périmetrique.

3. Boyau selon la revendication 1 ou 2 caracterisé en ce que la largeur (d) de la surface de la carcasse portante, dans laquelle s'interpénètrent les deux parties marginales des couches portantes (1,2), est au moins 10 mm et, tout au plus, 63 % du périmètre méridien de l'enveloppe.

4. Boyau selon l'une des revendications 1 à 3 caracterisé en ce que les couches portantes (1,2) sont fabriquées en tissu corde diagonal et disposées l'une sur l'autre avec les fibres croisées.

Fig.1

Fig.2        Fig.3        Fig.4

Fig.5        Fig.6

Fig.7